(19) Europäisches Patentamt
European Patent Office
Office européen des brevets

(11) **EP 0 550 231 B1**

(12) **EUROPEAN PATENT SPECIFICATION**

(45) Date of publication and mention
of the grant of the patent:
**26.03.1997 Bulletin 1997/13**

(51) Int Cl.6: **H04N 7/01**, H04N 5/44

(21) Application number: **92311640.4**

(22) Date of filing: **21.12.1992**

(54) **Method for edge-adaptive interpolation of a television picture**

Verfahren zur kantenadaptiven Interpolation eines Fernsehbildes

Procédé pour l'interprétation d'une image de télévision adaptive aux bords

(84) Designated Contracting States:
**DE ES FR GB IT NL SE**

(30) Priority: **31.12.1991 FI 916195**

(43) Date of publication of application:
**07.07.1993 Bulletin 1993/27**

(73) Proprietor: **NOKIA KULUTUSELEKTRONIIKKA OY**
**20321 Turku (FI)**

(72) Inventor: **Salonen, Jouni**
**SF-33720 Tampere (FI)**

(74) Representative: **Singleton, Jeffrey et al**
**Eric Potter Clarkson**
**St. Mary's Court**
**St. Mary's Gate**
**Nottingham NG1 1LE (GB)**

(56) References cited:
**EP-A- 0 192 292**  **EP-A- 0 396 229**
**US-A- 5 093 721**

**Description**

The invention relates to a method, in which a new line is interpolated between the lines in a sampled television picture using an edge detection, which detects the edge direction.

In a well known way a received television picture comprises two fields which are scanned on the television screen so that they are interleaved, i.e. first the odd field lines are scanned and then the even field lines are scanned between them. The interleaved scanning in combination with a low field frequency (50 Hz or 60 Hz) generates visible inconveniences, such as flicker between lines, line drift and flicker in large picture areas. Different methods have been developed to reduce line flicker and white field flicker and otherwise to improve the picture, so that the received picture is improved by increasing the scanning frequency with signal processing means. A 50 Hz field frequency system is used in the following examples, but the principle is the same in a 60 Hz system. Thus it is possible to convert an original picture with the format 625/2:1/50 Hz into a progressively displayed picture with the format 625/1:1/50 Hz. Then the non-interleaved picture comprises original and interpolated lines. The field frequency, which now is also the picture frequency, remains the same, but the line frequency is increased to the double. Each picture field thus comprises alternating original lines and interpolated lines. It is also possible to generate a picture, in which the number of lines is the double of the received picture. The interpolated lines are displayed alternating with the original lines. Then the picture comprises two interleaved scanned fields of 625 lines each, so that the format is 1250/2:1/50 Hz. The field frequency is still the same as in the original, but the line frequency is doubled. As a third alternative, a picture can be generated, in which every second field is an original field and every second field is completely interpolated. The original and the interpolated fields are displayed at a frequency of 100 Hz so that two new fields are interpolated between two sequentially received fields. This case is described as AB'A'B, in which A' and B' represent the completely interpolated fields. The new picture then has the format 1250/2:1/100 Hz, so that both the field frequency and the line frequency are doubled. There are also other means to improve the received picture, but the above described methods have as a common feature, that new lines must be generated with the aid of old lines, using some suitable interpolation algorithm.

Several different methods have been developed to generate new lines by interpolating its pixels with the aid of the pixels in the same and/or the previous field. The simplest method is to repeat the line, so that the line exactly corresponds to the previous original line. This is suitably used in the moving areas of the picture, if there are no diagonal or horizontal edges in the area of interest. If there are edges, they cause edge flicker and a serrated display of diagonal lines. Another method is to generate the pixels of the new line as the average value of the pixels at the corresponding position on the previous and on the next line. This method is simple, but in two-dimensional picture processing it causes unsharp edges and also a visible serration of the edges, particularly in stationary picture areas. A third method is to move the field, whereby a whole new field is the same as the previous field, i.e. the lines of the field are copies of the lines in the previous field. This method is useful only in stationary areas of the picture.

The above mentioned three methods represent methods, which use fixed algorithms. Except for the last mentioned method they require very little memory, and the algorithms are simple. However, signal processors make it possible to use more effective methods utilizing median operations, whereby the interpolation algorithms could be made automatically adaptive. In the median operation the inputs representing pixels, or samples obtained by their processing, are ordered according to magnitude, and the output value from the operation is the median of the input values. Some of the input values could be weighted, and the median operation could also contain linear sub-structures. The median operation can cover pixels from the neighborhood of the interpolated pixel, both from the same field and from the previous field. A simple 3-point interpolator is a median operation, in which the inputs are the known points above and below the interpolated point and the point on the previous line corresponding to the interpolated point. This interpolator tends to maintain the spatial and temporal contents of the picture, but because the spatial interpolation is limited to the vertical direction, diagonal lines are displayed as serrated lines. In order to overcome the limitations of the 3-point interpolator, more complex filter structures have been developed, e.g. the 7-point median filter, in which some input values can be weighted values. However, filters of this type are limited in that they are not able to reproduce lines having a width of only half a pixel, resulting in folding in picture areas containing high frequencies. Moreover there occurs serration of the edge lines, and particularly when weighting factors are used there occurs flicker in picture areas having high vertical frequencies. On the other hand the 7-point median very well retains step-like edges and edges formed by two downwards slanting lines ("roof" form).

The adaptive methods form the third group of interpolation methods. Their basic idea is to select the algorithm according to the motion content of the picture. Thus spatial interpolation is used for picture areas containing motion, and temporal interpolation is used for stationary areas. In areas containing motion it is also sought to have a good reproduction of the edges. The difficulty in these methods is particularly how to have a reliable recognition of motion and its direction, and how to recognize an edge and its direction.

There is also known an interpolation method ALFRED (Adaptive Line Flicker Reduction), which is described in European Patent Application number EP-A-0 192 292.

It uses two different interpolation algorithms: an algorithm based on a linear operation (averaging) and a median operation (3-point median). The reason for two interpolators is that a 3-point median filter has a zero response at frequency $1/3*f_s$, and a 180 degrees phase shift at frequency $1/2*f_s$. Therefore it is advisable to avoid using a median filter for filtering at these frequencies, and to use linear interpolation instead. The Alfred method has an adaptive control block, which examines the spectral energy of the signal components. If the energy exceeds a certain limit, the masking block gradually directs the interpolation from the median filtering into the linear interpolation, and when the energy again falls below the limit the interpolation is again gradually directed to a median operation.

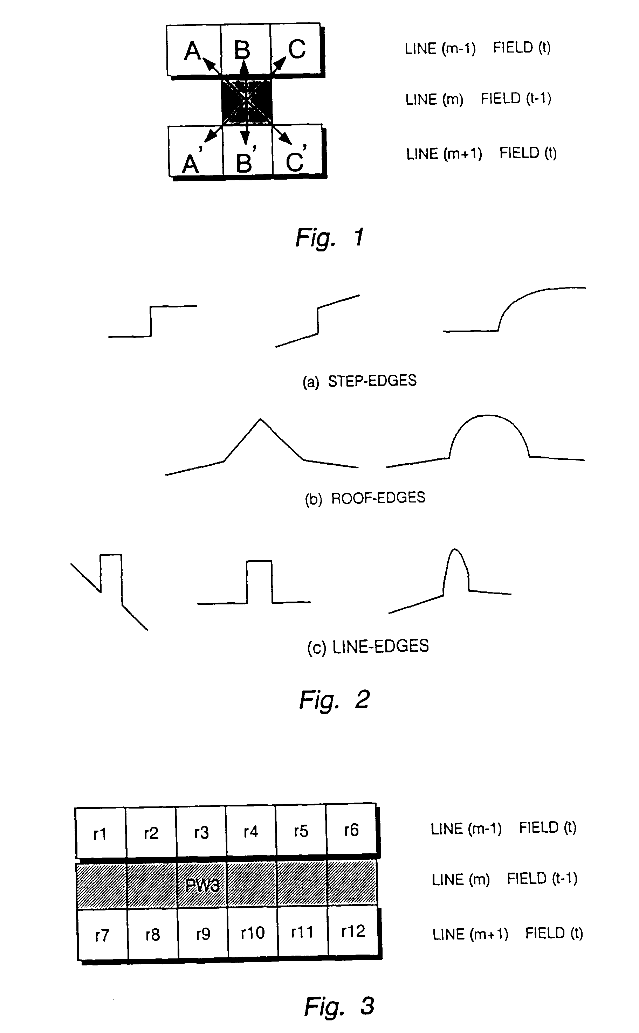

The advantage of all the above presented known methods is that they are reasonably simple. They also have in common that they in no way examine the direction of the edges in the picture, and so it can be clearly seen how straight edges are changed into serrated lines. In some methods, particularly in the 3-point median operation, a straight line could break. Serrations, line breaks and the unsharpness of the edge areas, depend very much on the direction of the edge area and also on the motion contents of the picture. To reduce these adverse effects a method should be developed, which examines the direction of an edge, and when this is found, the interpolation algorithm is selected based on the edge information. T. Doyle et al. have presented one such method, which uses a direction dependent median filter DDMF T.Doyle, M.Looymans, "Progressive Scan Conversion Using Edge Information" Proceedings of the Third International Workshop on Signal processing for HDTV, Torino, Italy. 1989. Figure 1 shows the operating window of this filter. The samples A, B and C are known adjacent samples on the line m-1, and the samples A', B' and C' are known adjacent samples at the same vertical positions on the next line of the same field. The edge is here determined on the basis of correlation measurements, in which the absolute difference D1, D2 and D3 of two respective samples are calculate and defined as: D1 = A - C'; D2 = B - B'; and D3 = C - A'. The dimension {D1, D2, D3} = MAX{D1, D2, D3} - MIN{D1, D2, D3} is used as a measure of the correlation. If the dimension is small, then the responses in different directions are close to each other, which means a clearly recognizable edge. Then a 3-point vertical median filter is used to interpolate the new pixel. If the dimension is large, then presumably the correlation is strong in the direction of the edge and weak in other directions, and the direction of the edge may be deduced from the absolute differences. In figure 1 the arrow lines show the pixels whose difference is calculated. In this method the examination is limited to edges having the directions of 45, 90 and 135 degrees in order to simplify the equipment complexity. The weakness of this method is that it is not able to recognize on a uniform background a line having the width of one pixel. It will interpolate correctly only when such a line is vertical; in all other cases it will break the line, because the interpolation will include pixels of the background. A false interpolation is seen as flicker.

European patent application EP-A-0 396 229 discloses a method and apparatus for spatially interpolating between lines of a video signal by: horizontally interpolating between samples of the video signal to produce a supersampled signal; determining, for each sample of the supersampled signal, the extent of matching between two blocks of samples of the supersampled signal; selecting, for each sample of the line to be interpolated, the gradient vector associated with the horizontal offset that produces the greatest extent of matching between the two blocks; and spatially interpolating between samples of the video signal to generate samples of the interpolated line, the direction of interpolation of the spatial interpolator being controlled in accordance with the gradient vector selected.

This invention describes an adaptive method to interpolate a new pixel, the method having none of the above presented disadvantages. One aim of the invention is to develop for the method a substantially correct edge detection, on which the interpolation algorithm is based.

The edge detection is most essential in the recognition of an object. Firstly, when the human eye looks at an unknown object it first examines the contours. Secondly, a form analysis and recognition is carried out after the contours are identified. Thirdly, many pictures do not contain any concrete objects, and perception of these pictures depends on their structural characteristics, which is closely related to edge detection. Thus it may be said that edge detection possibly is the most important part of picture analysis. When we look at an object, we look at its edges and corners, and at their serration and sharpness. Therefore it is important to recognize the local picture contents and to interpolate in accordance with that. Figure 2 shows a set of typical edge forms: figure 2a shows two forms of step-edges, figure 2b three forms of roof-edges, and figure 2c shows three forms of line-edges (dent-edges). The method must be able to recognize the direction of edges of these types. The method of the invention utilizes the same basic principle as the above described DDMF filter, in which parameters were calculated from the sample window's pixels having different horizontal positions. The method is particularly intended for the examination of picture areas containing motion, and due to this only one of the interleaved original fields can be used for the interpolation. The second original field is useless, and a new one is then formed by interpolation. The lines of the new field can be displayed progressively between the lines of the first original field, whereby the method is well suited to remove interlacing. Thus in the method the correct interpolation direction is found, and then the interpolator is selected according to it. In order to find the correct interpolation direction, correct edge information in the neighborhood of the interpolated pixel must be obtained.

The method is characterized in what is said in claim 1, and the arrangement in what is said in claim 5.

The method utilizes a 6*3 edge detection mask, which is used in the calculation of the edge estimates in the neighborhood of the interpolated pixel. The edge detection mask is moved in the vertical and horizontal directions so that the edge detection estimates, calculated for each position of the mask, form a 5*3 mask around the interpolated pixel. The final interpolation direction is determined from the estimated mask in accordance with the direction having the maximum number of minimum directions in the estimated mask. Surprisingly it was found that the best possible edge detection is obtained, and contrary to known methods, no line breaks occur in the final displayed picture containing lines interpolated in accordance with the edge detection information, when the sample window of the edge detection mask is selected according to the invention, and when the edge detection estimates are calculated in the presented way. The method, which is both motion and edge-adaptive, uses for the interpolation the local picture contents, i.e. the lines above and below the interpolated line. The interpolation is temporal in the sense that it also utilizes a line of the previous field. The edge detection is based on the addition of absolute difference signals calculated in a 6*3 window, and on the mutual magnitude order of their response signals. It is possible to recognize edges in nine directions, being 26, 35, 45, 64, 90, 116, 135, 146 and 154 degrees (for square pixels). The edge detection utilizes the fact, that when a window contains an edge, then the difference between two pixels in the direction of the edge is very small and correspondingly in the direction across the edge it is very large. In other words, the minimum response is obtained with a high probability in the direction of the edge. Even when the interpolation utilizes lines above and below the interpolated pixel, the determination of the interpolation direction uses pixels located on two previous lines and two subsequent lines, so that the a large number of pixels, in total 40 pixels, are used in the selection of the edge information. This provides a very high probability for the correct edge information.

The invention is described in more detail with the aid of the following schematic figures, in which:

figure 1 shows the filter window used in a known edge detection method;

figure 2 shows some forms of a basic edge;

figure 3 shows the sample window used in the calculation of the edge detection estimates;

figure 4 is a three-dimensional presentation of the interpolated lines and their neighborhood;

figures 5 a to i show pixels included in the filter window calculation;

figure 6 shows the 5*3 mask formed by the edge detection estimates;

figure 7 is a basic presentation of the edge detection mask movement for the calculation of required edge detection estimates;

figure 8 shows an arrangement circuit to provide the edge transmission estimates;

figure 9 shows the interpolator arrangement used to calculate the interpolated pixel;

figure 10 shows memories required in edge detection and in the interpolation; and

figure 11 shows memories required to check consistency of the edge information .

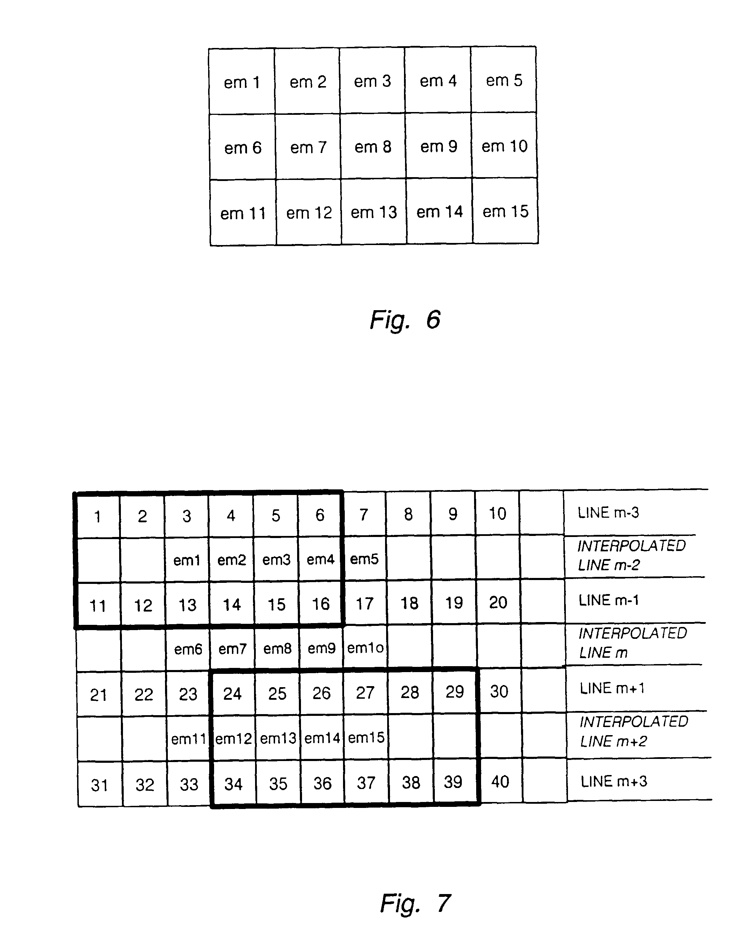

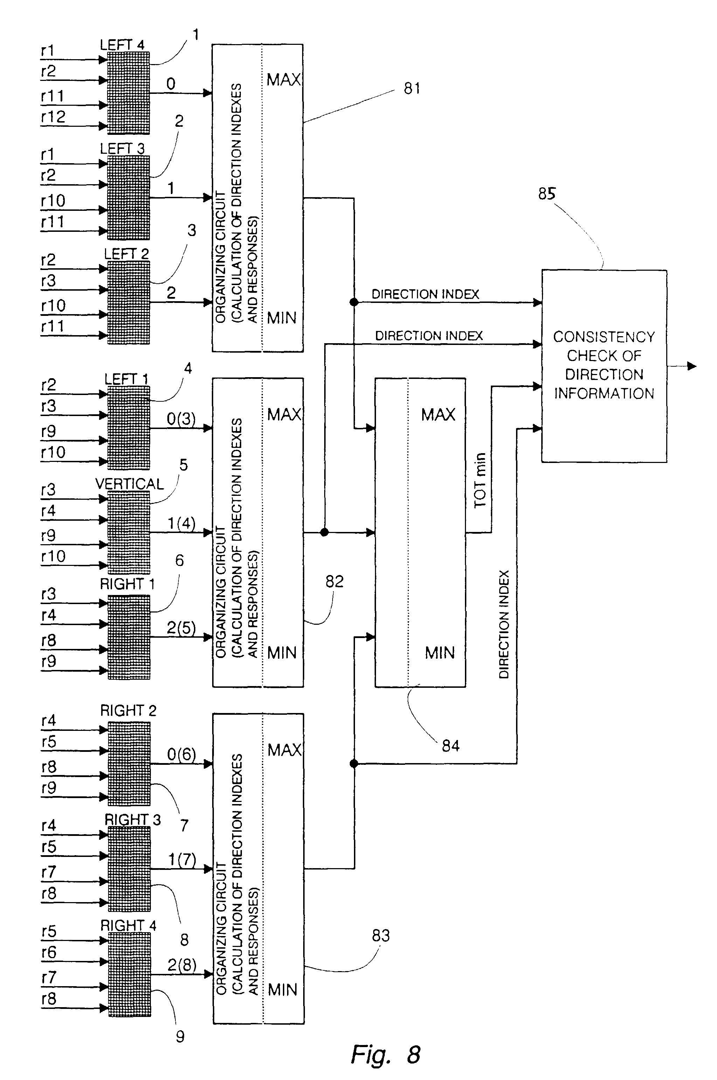

The contents of figures 1 and 2 were already described above in connection with the description of prior art. Figure 6 shows the 5*3 mask formed by edge detection estimates. The estimates are designated em1...em15, and there are 15 of them. It is conceived that this mask is positioned so that the interpolated point is at the edge information estimate em8. The edge information estimates em1...em15 are calculated with the aid of pixels on the original lines using the 3*6 filter window illustrated in figure 3. The interpolation in accordance with the edge information mask estimates is described later. First we describe how the estimates are generated using the window according to figure 3. To this end we first refer to figure 7. It shows a certain picture area, in which the pixels 1-10 of line m-3, pixels 11-20 of line m-1, pixels 21-30 of line m+1, and pixels 31-40 of line m+3, represent pixels on sequential lines in the same field. Between these lines the new lines m-2, m and m+2 must be interpolated. We examine the case, where we have to interpolate a pixel between pixel 15 (line m-1) and pixel 25 (line m+1). To this end the above mentioned edge detection estimates e1...e15 are calculated. In calculating the estimate em1 the 3*6 window used for this calculation is in a position represented by the upper rectangle. When em1 has been calculated, the window is moved one pixel to the right, and the estimate em2 is calculated. This goes on, until after the calculation of estimate em5, the window is moved to the left and down, so that pixels of the lines m-1 and m+1 will be within the window. Now the window is moved to the right, and the estimates em6...em11 are calculated. In a corresponding way the window is lowered to calculate the estimates em11...em15. When the last estimate em15 is calculated the window is in the position represented by the lower rectangle.

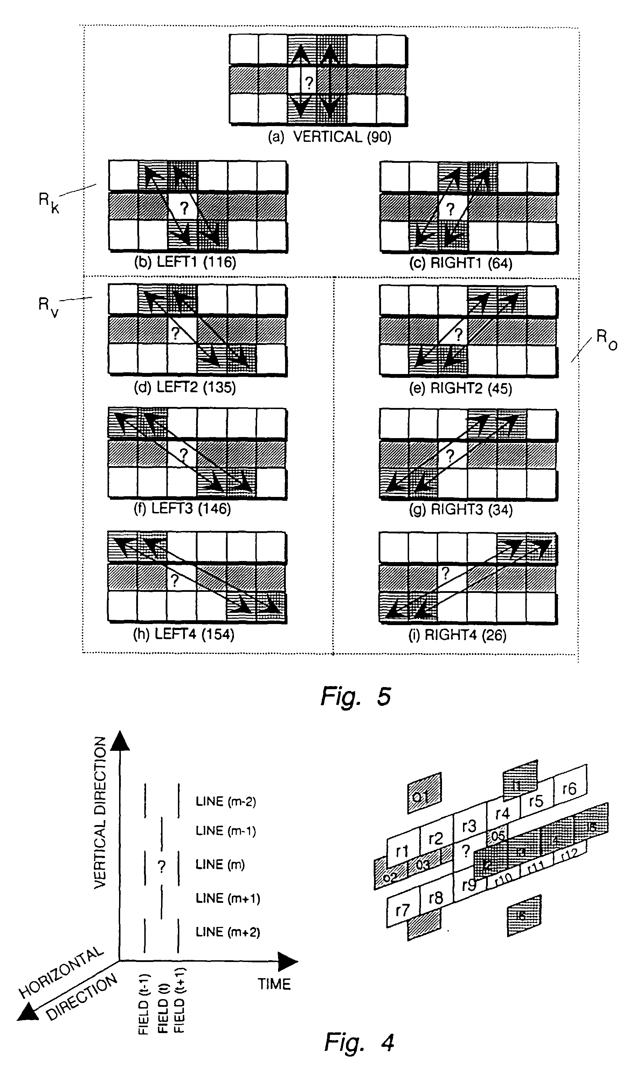

The window used in the calculation of each estimate and shown in figure 3 comprises 6 adjacent pixels r1, r2, r3, r4, r5 and r6 on the line m-1, and similarly 6 pixels r7, r8, r9, r10, r11 and r12 on the line m+1 of the same field t. With the aid of the pixels of these lines the value of the edge estimate designated with a question mark ? has to be calculated. Here the original picture is shown as orthogonally sampled, but also any other sample pattern could be used. The coordinate system shown in figure 4 illustrates clearly the lines of the pixels used in the interpolation and the line to be interpolated. Figures 5 a to i show possible edge line directions, and in each case the pixel pairs to be included in the calculation. In figure 5a it is examined, whether the line has an angle of 90 degrees, in figures b, d, f and h, whether the line is slanting to the left in the directions 116, 135, 146 and 154 degrees, and in the figures c, e, g and i, whether the line is slanting to the right in the directions 26, 34, 45 and 64 degrees. These nine cases are divided into three groups to be examined: the middle group Rk, comprising the examined directions 64, 90 and 116 degrees (figures a, b and c); the right group Ro, comprising the examined directions 26, 34 and 45 degrees (figures e, g and i); and the left group Rv, comprising the examined directions 135, 146 and 154 degrees (figures d, f and h). Each possible edge direction is examined by using four pixels and calculating the sum of the absolute values of the differences of the pixels. In figure 5 the pixel pair locations are shown by the tips of the unbroken line arrows. First the responses for each edge direction is calculated as follows:

$$
\begin{aligned}
&\underline{\text{The middle group Rk:}} \\
&\text{vertical} = |r3 - r9| + |r4 - r10| \\
&\text{right1} = |r3 - r8| + |r4 - r9| \\
&\text{left1} = |r2 - r9| + |r3 - r10| \\
&\underline{\text{The left group Rv:}} \\
&\text{left2} = |r2 - r10| + |r3 - r11| \\
&\text{left3} = |r1 - r10| + |r2 - r11| \qquad\qquad (1) \\
&\text{left4} = |r1 - r11| + |r2 - r12| \\
&\underline{\text{The right group Ro:}} \\
&\text{right2} = |r4 - r8| + |r5 - r9| \\
&\text{right3} = |r4 - r7| + |r5 - r8| \\
&\text{right4} = |r5 - r7| + |r6 - r8|
\end{aligned}
$$

In the following the calculation of the edge information estimates is described with reference to both figure 3 and figure 8. The responses of each direction is calculated in calculation blocks 1 to 9, and as inputs to each block (left1... left4; vertical, right1...right4) are the pixel values obtained by the formulas (1). When the responses for all nine directions have been calculated they are grouped in order of magnitude, or the maximum and minimum responses of them are found, or only the minimum response is found. In the organizing block 81 the responses of group Rv are organized, in the block 82 the responses of group Rk are organized, and in block 83 the responses of group Ro are organized. When the minimum response of each group is found, its direction is stored in the memory 84. The magnitude of the minimum response value, and possibly also the maximum response value organized in each of the blocks 81, 82 and 83, are supplied to the third organizing block 84, which then will find the lowest value of the minimum value found in the blocks 81, 82 and 83, the minimum minimum, referred to as TOTmin. The value of TOTmin is stored in the memory 84. In practice it is sufficient to store in the memory only the identification of that group (Ro, Rk or Rv), in which the TOTmin is found.

When in the window of figure 3 the value and the direction of the minimum in each group has been calculated using the presented formulas, and when it is determined in which group TOTmin resides, then this information is stored as the estimate "em" in the memory 84. Thus, when the window is in the position shown in figure 7, where the value of the estimate em1 is calculated, the value of the estimate em1 will comprise information of four parts:

1) the direction of the minimum response of group Ro;
2) the direction of the minimum response of group Rv;
3) the direction of the minimum response of group Rk;
4) TOTmin, which indicates which group has the lowest minimum response.

Then the window is slid one pixel to the right and the value of the estimate em2 is calculated in the above presented way. The estimates em1-em5 can be calculated by sliding the window four times to the right. Then the window is moved back to the left to its starting position and lowered downwards, so that the pixel in the window's upper left pixel position will be the pixel 11 of line m-1, figure 7. The edge information estimates em6-em10 are now calculated by sliding the window to the right. In a corresponding way the edge estimate values e11-e15 of the lowest row in the 5*3 estimate window are calculated by sliding the 6*3 window.

Now sufficient edge information of the neighborhood of the interpolated pixel is stored in the memory 84. Based on this edge information, or the estimates em1-em15, the next final interpolation direction is selected. This is made so that with the aid of these estimate values it is calculated how many TOTmin-values are in the left group Rv, in the middle group Rk, and in the right group Ro. The group containing the highest number of TOTmin-values is selected as the group, within which the final interpolation is made in some direction. If we assume that the group Rv has the highest number of TOTmin-values, then the final interpolation is made according to the minimum direction of this group. It is advantageous to set a certain limit, which the number of TOTmin-values must exceed so that it will be accepted as the group indicating the interpolation direction. A suitable value is e.g. 10. If the number is lower than this, then it can be concluded that the picture area has no distinct edge, and the interpolation is made according to the direction of the minimum response of the middle group Rk. This means that the interpolation is vertical or almost vertical.

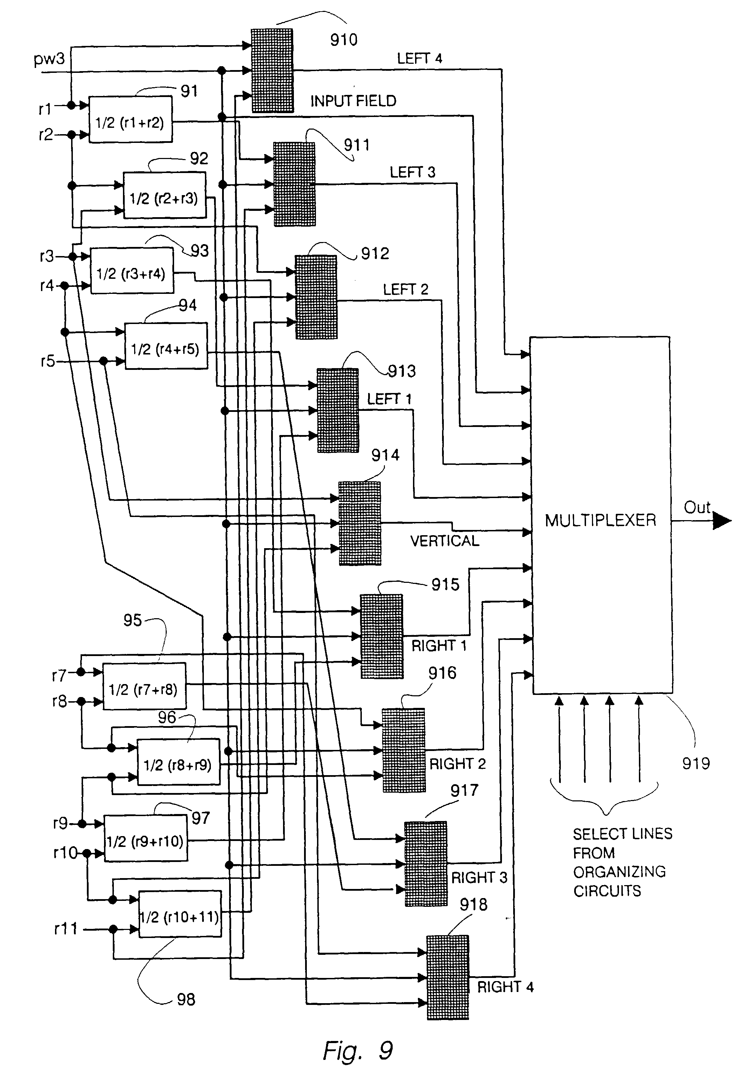

Figure 9 shows an embodiment for the connection of the interpolators. The arrangement has as inputs the pixels rl-r12 of the 3*6 edge detection window and the line m of the previous field t-1, from which one input pwn of the 3-point median is obtained, in which n represents the pixel's horizontal position in the window. The inputs r1-r11 represent according to figure 3 the known pixels on the line above and below the pixel to be interpolated, identified as PW3. Thus there are nine 3-point median interpolators in accordance with the examined directions. The outputs 910-918, left4 etc, of the 3-point median interpolators here refer to the possible edge directions of the picture 5. First the averages of the pixels are calculated in 2-point linear interpolators, represented by the eight rectangles 91-98 on the left in the figure. Let's assume that according to the pattern of figure 6 it was determined that the edge lies in the direction left1 (figure 5b), and the point represented by PW3 has to be interpolated. Then the 3-point median filter inputs are the average of the upper line pixels r2 and r3 calculated in the interpolator 92, the average of the lower line pixels r9 and r10 calculated in the interpolator 97, and the value pw3 of the middle line which is the same as the (known) value of the line in this position. These averaging interpolators 92 and 97 operate as linear sub-structures of the 3-point median filter 913. All other averaging interpolators operate in a corresponding way.

However, it has to be noted that the 3-point median filters 910, 912, 926 and 918 do not have the above mentioned linear sub-structures, but each input represents only one pixel value. The multiplexer 919 selects one of its inputs to the output, and this output forms one pixel on the line to be interpolated. The multiplexer 919 is controlled by selection lines, supplied by a decision circuit calculating with the aid of the edge information estimates em1-em15 the direction, in which the final interpolation is made. The decision circuit, to which said memory 84 is connected, supplies the multiplexer 919 with the selection lines. This control information controls the multiplexer to connect to its output the input defined by the control information. The output is now that pixel, which forms one pixel on the line to be interpolated. In principle the other pixels of the line are generated in the same way, as are the pixels of all other lines.

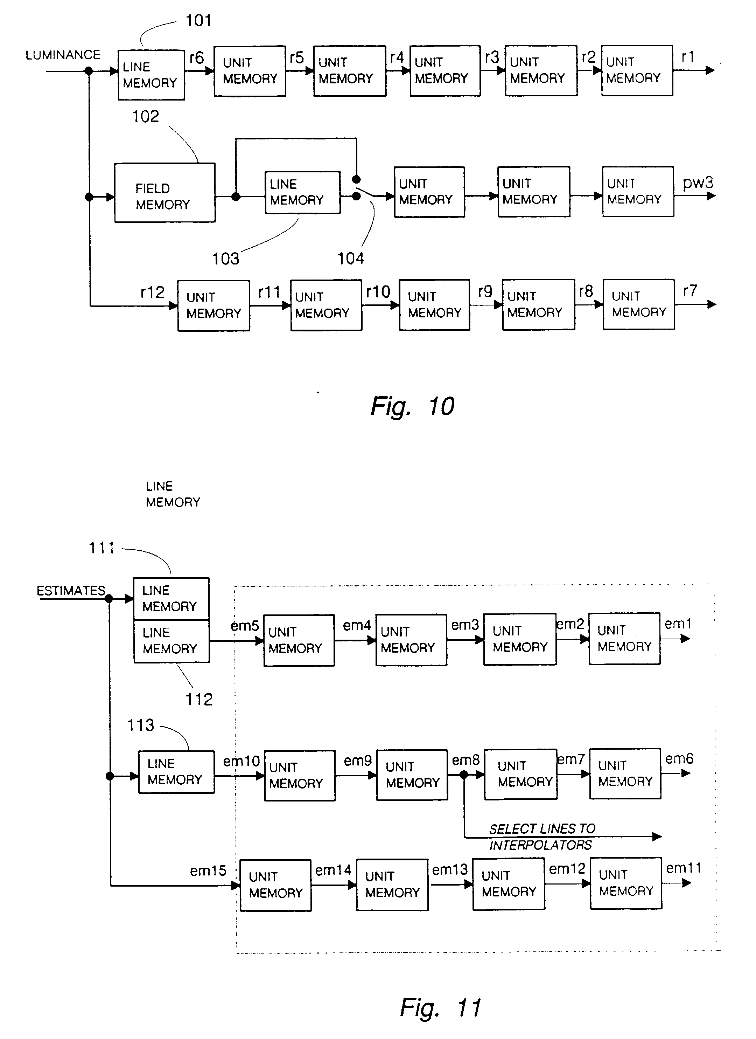

In the previous description we did not particularly explain how the direction of the minimum responses are stored in the memory. A person skilled in the art knows several different ways to manage with a minimum memory requirement. One possibility is to use three bit identifications, where the first bit indicates the minimum direction. When TOTmin also has three bits, the first bit can indicate the group where the minimum is, and from the identification of this group it is then easy to find that first bit, which indicates the exact direction of the minimum. There are many other means as well. Figure 10 shows the memories required for edge detection and interpolation. The input line pixel values (luminance values) are supplied to the line memory 101, whereby it is possible to read from this memory the upper line pixels r1-r6 used in the 3*6 mask. The blocks after the line memory 101 in figure 10 represent delay means, at the outputs of which it is possible to read simultaneously the values of six consecutive pixels. Because the interpolation also uses lines of the previous field, a field memory 102 is required, from which the lines are read one at a time into the line memory 103. From the line memory the line pixels are supplied to delay means operating as unit memories, and from them it is possible to read the pixel value of the previous field required in the interpolation. The line memory can be passed by the switch 104 in the case of an even field, between whose lines the new lines are interpolated; otherwise the line memory 103 must be used. Finally the pixels r7-r12 required in the 6*3 mask are obtained from the memory means of the lower branch.

If it is desirable to save memory and if it is possible to sacrifice quality, then the described method can also be used together with interpolators within the field. Then the field memory 102 and the line memory 103 may be omitted. Then a linear interpolation would be used in the edge direction. If the edge is within the interval 26 to 154 degrees, there are no problems and the result is as good as in the method with interpolation between fields. On the other hand the horizontal and approximately horizontal edges are blurred due to the linear interpolation. Instead of a 3-point median the linear interpolation uses an interpolator, which calculates the average of points above and below the line.

Finally figure 11 shows the memories required to check the consistency of the edge information, i.e. the memories into which the calculated edge information estimates em1-1m15 are stored. These estimates are in a 3*5 mask, requiring consecutive line memories 111 and 112, from which the estimate values em1-em5 are supplied to the outputs of the delay means, and a line memory 113, from which the mask's middle line estimate values em6-em10 are supplied to the outputs of the delay means. The estimates of the mask's lower line are supplied, as soon as they are calculated, to the unit memories of the lower branch of figure 11, these unit memories comprising consecutive delay elements.

The described method provides an efficient way to interpolate pixels, taking into account a line and its direction, which possibly occurs in the picture. The method keeps the lines unbroken, and no step formation occurs, as is the case in methods used until now. It is obvious that the practical realization of the circuit used in the method could vary largely. In the practical realization we seek to minimize the utilization of memories, and this requirement dictates the structure to a very high degree. Thus a person skilled in the art is able to realize a practical construction in numerous different ways, still keeping within the scope of the claims.

**Claims**

1. A method for edge-adaptive interpolation of a new line from a sample sequence video signal input using a window, into which samples are directed from three known lines, and in which the interpolated pixel is located on the middle line,
   characterized in that:

   - a 3*6 window is used;

   - two adjacent samples from the upper and from the lower line in the window are selected so that imaginary parallel lines connecting the upper and lower line samples get nine different directions relative the horizontal plane;

   - the sum value of the absolute values of the differences of sample pairs connected by the parallel lines is calculated in each direction so that, when the samples in the window's upper row are designated from the left to the right with symbols r1, r2, r3, r4, r5 and r6, and the samples in the lower row are correspondingly designated with symbols r7, r8, r9, r10, r11 and r12, the sum values in the different directions are calculated as follows:

$$left1 = |r2 - r9| + |r3 - r10|$$

$$left2 = |r2 - r10| + |r3 - r11|$$

$$left3 = |r1 - r10| + |r2 - r11|$$

$$left4 = |r1 - r11| + |r2 - r12|$$

$$vertical = |r3 - r9| + |r4 - r10|$$

$$right1 = |r3 - r8| + |r4 - r9|$$

$$right2 = |r4 - r8| + |r5 - r9|$$

$$right3 = |r4 - r7| + |r5 - r8|$$

$$right4 = |r5 - r7| + |r6 - r8| \; ;$$

- the sum values are calculated in groups, so that the first group (Rv) comprises the directions left4, left2, left3; the second group (Rk) comprises the directions left1 vertical, right1; and the third group (Ro) comprises the directions right2, right3 and right4; and

the method further includes steps wherein:

a) for each group the minimum value of the sum values is found and its direction information and group information is stored in memory;
b) the minimum value (TOTmin) of the obtained minimum values is found and its group information is stored in memory, whereby the information in the memory forms an edge information estimate (em);
c) the window is moved into different positions both in the horizontal and vertical plane, so that the window will contain samples from two lines preceding the line to be interpolated and from two lines subsequent to it;
d) the steps a) to c) are repeated in every position, so that edge information estimates (em2 - em15) are obtained forming a 3*5 area over the pixel to be interpolated when it is located in the center of the middle line of said area;
e) the group having the maximum number of the minimum values (TOTmin) is determined; and
f) the interpolation is performed in the direction indicated by the direction information of the minimum value of this group, using said 3*6 window.

2. The method according to claim 1, characterized in that it is possible to perform the interpolation in any of the directions 26, 35, 45, 64, 90, 116, 135, 146 and 154 degrees.

3. The method according to claim 1, characterized in that the interpolation uses a 3-point median filter, whose first input is the average of two adjacent pixels of the upper line; the second input is the average of two adjacent pixels of the lower line; and the third input is the previous field's pixel (pw3) corresponding to the pixel to be interpolated.

4. The method according to claim 1, characterized in that during interpolation in the directions 154 degrees, 135 degrees, 45 degrees, and 26 degrees, the first input is the window's upper sample in the corresponding direction and the second input is the lower sample.

5. Circuit arrangement for edge-adaptive interpolation of a new line from a sample sequence video signal input using a window, into which samples are directed from three known lines, and in which the interpolated pixel is located on the middle line, characterized in that it operates in a 3*6 window and comprises:

- calculation parts (1,2,3,4,5,6,7,8,9), into which the pixels of the window's upper and lower lines are supplied and which calculate the sum value of the absolute values of the differences of two adjacent pixel pairs, the pixels of the pair being located on different lines, whereby the pairs are selected so that the imaginary parallel lines connecting them are in nine different directions relative the horizontal plane in the window;
- organizing parts (81,82,83,84) to process the sum values;
- a memory and calculation part (85) to store the outputs of the organizing parts;
- interpolators (910,922,912,913,914,915,916,917,918) to interpolate a pixel; and
- a multiplexer (919) connecting one of the interpolator outputs to its output controlled by information stored in the memory and calculation part (85).

6. Circuit arrangement according to claim 5 characterized in that the calculation parts calculate the sums so that, when the samples in the window's upper row are designated form the left to the right with symbols r1, r2, r3, r4, r5 and r6, and the samples in the lower row are correspondingly designated with symbols r7, r8, r9, r10, r11 and r12, the sum values in the different directions are calculated as follows:

$$left1 = |r2 - r9| + |r3 - r10|$$

$$left2 = |r2 - r10| + |r3 - r11|$$

$$\text{left3} = |r1 - r10| + |r2 - r11|$$

$$\text{left4} = |r1 - r11| + |r2 - r12|$$

$$\text{vertical} = |r3 - r9| + |r4 - r10|$$

$$\text{right1} = |r3 - r8| + |r4 - r9|$$

$$\text{right2} = |r4 - r8| + |r5 - r9|$$

$$\text{right3} = |r4 - r7| + |r5 - r8|$$

$$\text{right4} = |r5 - r7| + |r6 - r8| \ .$$

7. Circuit arrangement according to claim 5 or claim 6 characterized in that the organizing parts comprise a first, a second and a third organizing part (81,82,83), each of these finding from the three sum values supplied to it the minimum value and the direction in which it was obtained, and fourth organizing part (84), the output of which is the information (TOTmin) of the minimum value of said minimum values.

8. Circuit arrangement according to claim 5 characterized in that the interpolators are 3-point median filters, whose first input is the average of two adjacent pixels of the upper line; the second input is the average of two adjacent pixels of the lower line; and the third input is the previous field's pixel (pw3) corresponding to the pixel to be interpolated.

9. Circuit arrangement according to claim 8 characterized in that the interpolators (910,912,916,918) interpolating in the directions 154 degrees, 135 degrees, 45 degrees, and 26 degrees have as a first input the window's upper sample in the corresponding direction and as a second input the lower sample.

10. Circuit arrangement according to claim 8 characterized in that the 3-point median filter has as a sub-structure a 2-point linear interpolator.


**Patentansprüche**

1. Verfahren für kantenadaptive Interpolation einer neuen Zeile aus einem Abtastsequenz-Videosignaleingang mittels eines Fensters, in welches Abtastsignale von drei bekannten Zeilen aufgenommen werden und in welchem das interpolierte Bildelement sich auf der mittleren Zeile befindet,
dadurch gekennzeichnet, daß:

- ein 3·6-Fenster verwendet wird;
- zwei benachbarte Abtastsignale von der oberen und von der unteren Zeile im Fenster ausgewählt werden, so daß imaginäre parallele Zeilen, die die oberen und unteren Zeilenabtastsignale verbinden, neun unterschiedliche Richtungen gegenüber der Horizontalebene erhalten;
- der Summenwert der Absolutwerte der Differenzen zwischen Abtastsignalpaaren, die durch parallele Zeilen verbunden sind, in jeder Richtung berechnet wird, so daß wenn die Abtastsignale in der oberen Reihe des Fensters von links nach rechts mit dem Symbolen r1, r2, r3, r4, r5 und r6 bezeichnet werden und die Abtastsignale in der unteren Reihe dementsprechend mit den Symbolen r7, r8, r9, r10, r11 und r12 bezeichnet werden, die Summenwerte in unterschiedlichen Richtungen wie folgt berechnet werden:

$$\text{links1} = |r2 - r9| + |r3 - r10|$$

$$\text{links2} = |r2 - r10| + |r3 - r11|$$

$$\text{links3} = |r1 - r10| + |r2 - r11|$$

$$\text{links4} = |r1 - r11| + |r2 - r12|$$

$$\text{vertikal} = |r3 - r9| + |r4 - r10|$$

$$\text{rechts1} = |r3 - r8| + |r4 - r9|$$

$$\text{rechts2} = |r4 - r8| + |r5 - r9|$$

$$\text{rechts3} = |r4 - r7| + |r5 - r8|$$

$$\text{rechts4} = |r5 - r7| + |r6 - r8| \; ;$$

- die Summenwerte in Gruppen berechnet werden, so daß die erste Gruppe (Rv) die Richtungen links4, links2, links3 umfaßt; die zweite Gruppe (Rk) die Richtungen links1, vertikal, rechts1 umfaßt; und die dritte Gruppe (Ro) die Richtungen rechts2, rechts3 und rechts4 umfaßt; und

das Verfahren außerdem die Schritte umfaßt, bei denen:

a) für jede Gruppe der Minimalwert der Summenwerte gefunden wird und seine Richtungsinformation und Gruppeninformation in einem Speicher abgespeichert wird;
b) der Minimalwert (TOTmin) der erhaltenen Minimalwerte gefunden wird und seine Gruppeninformation in einem Speicher gespeichert wird, wodurch die Information in dem Speicher eine Kanteninformationsabschätzung (em) bildet;
c) das Fenster in unterschiedliche Positionen sowohl in der horizontalen als auch in der vertikalen Ebene bewegt wird, so daß das Fenster Abtastsignale von zwei Zeilen vor der zu interpolierenden Zeile und von zwei Zeilen nach ihr enthält;
d) die Schritte a) bis c) in jeder Position wiederholt werden, so daß Kanteninformationsabschätzungen (em2 - em15) erhalten werden, die einen 3·5-Bereich über das zu interpolierende Bildelement bilden, wenn es sich im Zentrum der mittleren Zeile des besagten Bereichs befindet;
e) die Gruppe mit der Maximalzahl der Minimalwerte (TOTmin) bestimmt wird; und
f) die Interpolation durchgeführt wird in die Richtung, die durch die Richtungsinformation des Minimalwertes dieser Gruppe unter Verwendung des 3·6-Fensters angezeigt wird.

2. Verfahren nach Anspruch 1, dadurch gekennzeichnet, daß es möglich ist, die Interpolation in einer der Richtungen 26°, 35°, 45°, 64°, 90°, 116°, 135°, 146° und 154° durchzuführen.

3. Verfahren nach Anspruch 1, dadurch gekennzeichnet, daß die Interpolation einen 3-Punkt-Medianfilter verwendet, dessen erster Eingang der Durchschnittswert zweier benachbarter Bildelemente der oberen Zeile ist, dessen zweiter Eingang der Durchschnittswert zweier benachbarter Bildelemente der unteren Zeile ist; und dessen dritter Eingang das Bildelement (pw3) des vorangehenden Feldes ist, das dem zu interpolierenden Bildelement entspricht.

4. Verfahren nach Anspruch 1, dadurch gekennzeichnet, daß während der Interpolation in den Richtungen 154°, 135°, 45° und 26° der erste Eingang das obere Abtastsignal des Fensters in der entsprechenden Richtung ist und der zweite Eingang das untere Abtastsignal ist.

5. Schaltkreisanordnung für die kantenadaptive Interpolation einer neuen Zeile aus einem Abtastsequenz-Videosignaleingang mittels eines Fensters, in welches Abtastsignale von drei bekannten Zeilen aufgenommen werden, und in welchem das interpolierte Bildelement sich auf der mittleren Zeile befindet, dadurch gekennzeichnet, daß sie in einem 3·6-Fenster arbeitet und umfaßt:

- Berechnungsabschnitte (1, 2, 3, 4, 5, 6, 7, 8, 9), in welche die Bildelemente der oberen und unteren Zeilen des Fensters eingespeist werden und welche den Summenwert der Absolutwerte der Differenzen von zwei benachbarten Bildelementpaaren berechnen, wobei die Bildelemente des Paars sich auf unterschiedlichen Zeilen befinden, wodurch die Paare ausgewählt werden, so daß die imaginären parallelen Zeilen, die sie verbinden, neun unterschiedliche Richtungen gegenüber der Horizontalebene in dem Fenster einnehmen;
- Verwaltungsabschnitte (81, 82, 83, 84) zur Verwaltung der Summenwerte;
- einen Abspeicherungs-Berechnungsabschnitt (85) zum Speichern der Ausgänge der Verwaltungsabschnitte;
- Interpolierer (910, 922, 912, 913, 914, 915, 916, 917, 918) zum Interpolieren eines Bildelementes; und
- einen Multiplexer (919), der einen der Ausgänge des Interpolierers mit seinem Ausgang verbindet unter Steuerung durch Information, die in dem Abspeicherungs-Berechnungsabschnitt (85) abgespeichert ist.

6. Schaltkreisanordnung nach Anspruch 5, dadurch gekennzeichnet, daß die Berechnungsabschnitte die Summen so berechnen, daß wenn die Abtastsignale in der oberen Reihe des Fensters von links nach rechts mit den Symbolen r1, r2, r3, r4, r5 und r6 bezeichnet werden und die Abtastsignale in der unteren Reihe dementsprechend mit den Symbolen r7, r8, r9, r10, r11 und r12 bezeichnet werden, die Summenwerte in den unterschiedlichen Richtungen wie folgt berechnet werden:

$$links1 = |r2 - r9| + |r3 - r10|$$

$$links2 = |r2 - r10| + |r3 - r11|$$

$$links3 = |r1 - r10| + |r2 - r11|$$

$$links4 = |r1 - r11| + |r2 - r12|$$

$$vertikal = |r3 - r9| + |r4 - r10|$$

$$rechts1 = |r3 - r8| + |r4 - r9|$$

$$rechts2 = |r4 - r8| + |r5 - r9|$$

$$rechts3 = |r4 - r7| + |r5 - r8|$$

$$rechts4 = |r5 - r7| + |r6 - r8| \ .$$

7. Schaltkreisanordnung nach Anspruch 5 oder 6, dadurch gekennzeichnet, daß die Verwaltungsabschnitte einen ersten, einen zweiten und einen dritten Verwaltungsabschnitt (81, 82, 83), wobei jeder von diesen aus den drei ihm eingespeisten Summenwerten den Minimalwert und die Richtung, in welcher er erhalten wurde, findet, und einen vierten Verwaltungsabschnitt (84), umfassen, dessen Ausgang die Information (TOTmin) des Minimalwertes der Minimalwerte darstellt.

8. Schaltkreisanordnung nach Anspruch 5, dadurch gekennzeichnet, daß die Interpolierer 3-Punkt-Medianfilter sind, deren erster Eingang der Durchschnittswert von zwei benachbarten Bildelementen der oberen Zeile ist, deren zweiter Eingang der Durchschnittswert von zwei benachbarten Bildelementen der unteren Zeile ist; und deren dritter Eingang das Bildelement (pw3) des vorangehenden Feldes ist, das dem zu interpolierenden Bildelement entspricht.

9. Schaltkreisanordnung nach Anspruch 8, dadurch gekennzeichnet, daß die Interpolierer (910, 912, 916, 918), die in die Richtungen 154°, 135°, 45° und 26° als ersten Eingang das obere Abtastsignal des Fensters in entsprechender Richtung und als zweiten Eingang das untere Abtastsignal haben.

10. Schaltkreisanordnung nach Anspruch 8, dadurch gekennzeichnet, daß der 3-Punkt-Medianfilter als Substruktur einen 2-Punkt-Linearinterpolierer hat.


**Revendications**

1. Procédé d'interpolation s'adaptant à un contour d'une nouvelle ligne à partir d'une séquence d'échantillons d'entrée de signal vidéo, employant une fenêtre, dans lequel des échantillons sont dirigés en partant de trois lignes connues et dans lequel le pixel interpolé est situé sur la ligne médiane, caractérisé en ce que:

   * une fenêtre 3*6 est employée.
   * deux échantillons adjacents à partir de la ligne supérieure et de la ligne inférieure dans la fenêtre sont choisis de façon que les lignes parallèles imaginaires reliant les échantillons de ligne supérieure et de ligne inférieure prennent neuf directions différentes par rapport au plan horizontal.
   * la valeur de la somme des valeurs absolues de différences de paires d'échantillons reliées aux lignes parallèles est calculée dans chaque direction, de sorte que quand les échantillons dans la rangée supérieure de fenêtre sont désignés de la gauche vers la droite par les symboles r1, r2, r3, r4, r5, r6 et les échantillons dans la rangée inférieure sons désignés d'une manière correspondantes par les symboles r7, r8, r9, r10, r11 et r12, la somme des valeurs dans les différentes directions sont calculées comme suit :

$$\text{gauche } 1 = |r2 - r9| + |r3 - r10|$$

$$\text{gauche } 2 = |r2 - r10| + |r3 - r11|$$

$$\text{gauche } 3 = |r1 - r10| + |r2 - r11|$$

$$\text{gauche } 4 = |r1 - r11| + |r2 - r12|$$

$$\text{verticale} = |r3 - r9| + |r4 - r10|$$

$$\text{droite } 1 = |r3 - r8| + |r4 - r9|$$

$$\text{droite } 2 = |r4 - r8| + |r5 - r9|$$

$$\text{droite } 3 = |r4 - r7| + |r5 - r8|$$

$$\text{droite } 4 = |r5 - r7| + |r6 - r8|$$

   * les valeurs de la somme sont calculées en groupes de sorte que le premier groupe (Rv) comprend les directions gauche 4, gauche 2, gauche 3, le second groupe comprend les directions gauche 1, verticale, droite 1 ; et le troisième groupe (Ro) comprend les directions droite 2, droite 3 et droite 4 ; et

le procédé comprend en outre les étapes dans lesquelles :

a) pour chaque groupe la valeur minima des valeurs de la somme est trouvée et son information de direction et l'information de groupe est stockée dans la mémoire,

b) la valeur minimale (TOTmin) des valeurs minimales obtenues, est trouvée et son information de groupe est stockée dans la mémoire grâce à quoi l'information dans la mémoire forme un estimatif de l'information sur le contour (em),

c) la fenêtre est déplacée dans différentes positions à la fois dans le plan horizontal et vertical, de sorte que la fenêtre va contenir des échantillons provenant de deux lignes précédant la ligne qui doit être interpolée et provenant de deux lignes consécutives à celle-ci,

d) les étapes a) à c) sont rejetées dans chaque position de sorte que les estimatifs d'information sur le contour ($em^2$ - $em15$) sont obtenues en formant une zone $3^*5$, sur le pixel qui doit être interpolé lorsqu'il est placé au centre de la ligne médiane de ladite zone,

e) le groupe ayant le nombre maximum de valeurs minimales (TOTmin) est déterminé,

f) l'interpolation est effectuée dans la direction indiquée par l'information de direction de la valeur minimale de ce groupe en employant cette fenêtre 3*6.

2. Procédé selon la revendication 1, caractérisé en ce qu'il est possible d'effectuer l'interpolation dans chacune des directions 26, 35, 45, 64, 90, 116, 135, 146 et 154 degrés.

3. Procédé selon la revendication 1, caractérisé en ce que l'interpolation utilise un filtre median à 3 points dont la première entrée est la moyenne de deux pixels adjacents de la ligne supérieure ; la seconde entrée est la moyenne de deux pixels adjacents de la ligne inférieure ; et la troisième entrée est le pixel précédent de champ (pw 3) correspondant au pixel qui doit être interpolé.

4. Procédé selon la revendication 1, caractérisé en ce que durant l'interpolation dans les directions 154 degrés, 135 degrés, 45 degrés et 26 degrés la première entrée est l'échantillon supérieur de fenêtre dans la direction correspondante et la seconde entrée est l'échantillon inférieur.

5. Montage de circuit pour interpolation qui s'adapte au contour, d'une nouvelle ligne provenant d'une entrée de signal vidéo pour une séquence d'échantillon employant une fenêtre, dans lequel des échantillons sont dirigés en partant de trois lignes connues et dans lequel le pixel interpolé est situé sur la ligne médiane, caractérisé en ce qu'il opère dans une fenêtre 3*6 et comprend :

⇒ des parties de calcul (1, 2, 3, 4, 5, 6, 7, 8, 9) dans lesquelles les pixels des lignes supérieures et inférieures de la fenêtre sont fournies et qui calculent la somme de valeur des valeurs absolues des différences de deux paires de pixels adjacents, les pixels de la paire étant situés sur différentes lignes, par lesquelles les paires sont choisies de sorte que les lignes parallèles imaginaires qui les relient, sont dans neuf directions différentes par rapport au plan horizontal dans la fenêtre.

⇒ des parties d'organisation (81, 82, 83, 84) pour traiter les valeurs de somme.

⇒ une mémoire et une partie de calcul (85) pour stocker les sorties des parties d'organisation.

⇒ des interpolateurs (910, 911, 912, 913, 914, 915, 916, 917, 918) pour interpoler un pixel et un dispositif de multiplexage (919) qui relie une des sorties d'interpolateur à sa sortie contrôlée par l'information stockée dans la mémoire et dans la partie de calcul (85).

6. Montage de circuit selon la revendication 5, caractérisé en ce que les parties de calcul, calculent les sommes de façon que, quand les échantillons dans la rangée supérieure de la fenêtre sont désignées en partant de la gauche vers la droite avec les symboles r1, r2, r3, r4, r5 et r6 et les échantillons dans la rangée inférieure sont désignés d'une manière correspondante par les symboles r7, r8, r9, r10, r11 et r12, les valeurs de somme dans les différentes directions sont calculées comme suit:

$$\text{gauche} = |r2 - r9| + |r3 - r10|$$

$$\text{gauche} = |r2 - r10| + |r3 - r11|$$

$$\text{gauche} = |r1 - r10| + |r2 - r11|$$

$$\text{gauche} = |r1 - r11| + |r2 - r12|$$

$$\text{verticale} = |r3 - r9| + |r4 - r10|$$

$$\text{droite} = |r3 - r8| + |r4 - r9|$$

$$\text{droite} = |r4 - r8| + |r5 - r9|$$

$$\text{droite} = |r4 - r7| + |r5 - r8|$$

$$\text{droite} = |r5 - r7| + |r6 - r8|$$

7. Montage de circuit selon la revendication 5 ou la revendication 6, caractérisé en ce que les parties d'organisation comprennent une première, une seconde et une troisième partie d'organisation (81, 82, 83), chacune d'elles trouvant à partir des trois valeurs de somme fournies à elle, la valeur minima et la direction dans laquelle elle a été obtenue, et une quatrième partie d'organisation (84), dont la sortie est l'information (TOTmin) de la valeur minimale desdites valeurs minimales.

8. Montage de circuit selon la revendication 5, caractérisé en ce que les interpolateurs sont des filtres médians à 3 points, dont la première entrée est la moyenne de deux pixels adjacents de la ligne supérieure. la seconde entrée est la moyenne de deux pixels adjacents de la ligne inférieure et la troisième entrée est le pixel de champ précédent (pw3) correspondant au pixel qui doit être interpolé.

9. Montage de circuit selon la revendication 8, caractérisé en ce que les interpolateurs (910, 912, 916, 918) interpolant dans les directions 154 degrés, 135 degrés, 45 degrés et 26 degrés ont comme première entrée l'échantillon supérieur de fenêtre dans la direction correspondante et comme seconde entrée, l'échantillon inférieur.

10. Montage de circuit selon la revendication 8, caractérisé en ce que le filtre médian à 3 points a comme sous structure un interpolateur linéaire à 2 points.

LINE (m-1)    FIELD (t)

LINE (m)    FIELD (t-1)

LINE (m+1)    FIELD (t)

## Fig. 1

(a) STEP-EDGES

(b) ROOF-EDGES

(c) LINE-EDGES

## Fig. 2

| r1 | r2 | r3 | r4 | r5 | r6 |
|----|----|----|----|----|----|

LINE (m-1)    FIELD (t)

PW3

LINE (m)    FIELD (t-1)

| r7 | r8 | r9 | r10 | r11 | r12 |
|----|----|----|-----|-----|-----|

LINE (m+1)    FIELD (t)

## Fig. 3

15

(a) VERTICAL (90)

(b) LEFT1 (116)

(c) RIGHT1 (64)

(d) LEFT2 (135)

(e) RIGHT2 (45)

(f) LEFT3 (146)

(g) RIGHT3 (34)

(h) LEFT4 (154)

(i) RIGHT4 (26)

*Fig. 5*

*Fig. 4*

| em 1 | em 2 | em 3 | em 4 | em 5 |
|------|------|------|------|------|
| em 6 | em 7 | em 8 | em 9 | em 10 |
| em 11 | em 12 | em 13 | em 14 | em 15 |

*Fig. 6*

| | | | | | | | | | | | |
|---|---|---|---|---|---|---|---|---|---|---|---|
| 1 | 2 | 3 | 4 | 5 | 6 | 7 | 8 | 9 | 10 | | LINE m-3 |
| | | em1 | em2 | em3 | em4 | em5 | | | | | *INTERPOLATED LINE m-2* |
| 11 | 12 | 13 | 14 | 15 | 16 | 17 | 18 | 19 | 20 | | LINE m-1 |
| | | em6 | em7 | em8 | em9 | em1o | | | | | *INTERPOLATED LINE m* |
| 21 | 22 | 23 | 24 | 25 | 26 | 27 | 28 | 29 | 30 | | LINE m+1 |
| | | em11 | em12 | em13 | em14 | em15 | | | | | *INTERPOLATED LINE m+2* |
| 31 | 32 | 33 | 34 | 35 | 36 | 37 | 38 | 39 | 40 | | LINE m+3 |

*Fig. 7*

17

*Fig. 8*

*Fig. 9*

Fig. 10

Fig. 11